# EUROPÄISCHE PATENTSCHRIFT

(11) **EP 0 739 329 B1**
(45) Veröffentlichungstag und Bekanntmachung des Hinweises auf die Patenterteilung: **08.04.1998**
(21) Anmeldenummer: 94927568.9
(22) Anmeldetag: 06.09.1994
(51) Int. Cl.: C05G 5/00, A01C 21/00

(54) **DÜNGEMITTEL ENTHALTENDER FORMKÖRPER**
MOULDINGS CONTAINING FERTILISERS
CORPS FA ONNE CONTENANT DES FERTILISANTS

(30) Priorität: 15.09.1993 DE 4331288
(43) Veröffentlichungstag der Anmeldung: 30.10.1996
(73) Patentinhaber: Henkel Kommanditgesellschaft auf Aktien, 40191 Düsseldorf (DE)
(72) Erfinder: BECK, Michael, D-40591 Düsseldorf (DE); JEROMIN, Lutz, D-40723 Hilden (DE); RITTER, Wolfgang, D-42781 Haan (DE); SCHÄFER, Martin, D-47608 Geldern 1 (DE); SCHRÖDER, Peter, D-41748 Viersen (DE)
(86) Internationale Anmeldenummer: EP9402967
(87) Internationale Veröffentlichungsnummer: WO9507873

(56) Entgegenhaltungen:
- EP-A- 0 322 221
- WO-A-93/19023
- DE-A- 3 002 890
- DE-C- 579 573
- DE-U- 9 004 592
- FR-A- 1 117 832
- GB-A- 2 095 558
- US-A- 2 117 808

## Beschreibung

Die vorliegende Erfindung betrifft feste Düngemittel in einer Form, die Handhabung und Dosierung erleichtert.

Neben der Ausbringung von Düngern in Form von Pulvern oder Granulaten oder in flüssiger Form hat sich vor allem im Haus- und Gartenbereich auch die Anwendung in Form von Düngerstäbchen durchgesetzt. Werden diese Düngerstäbchen in der Nähe von Pflanzen in die Erde gesteckt, geben sie allmählich die enthaltenen Nährstoffe an den Boden ab und versorgen auf diese Weise die Pflanze. Mit diesem Verfahren ist eine einfache und exakte Dosierung der Düngermenge möglich. Auch die Freisetzungsrate der Nährstoffe läßt sich durch Wahl unterschiedlicher Bindemittel und Bindemittelanteile gezielt beeinflussen. Zum Stand der Technik sei beispielsweise auf die deutschen Patentschriften 26 07 347, 32 39 954 und 34 05 521 sowie auf die deutsche Patentanmeldung 32 47 917 und insbesondere auf die noch unveröffentlichte deutsche Patentanmeldung P 42 09 014.8 verwiesen. Weiteres einschlägiges Material ist in diesen Druckschriften zitiert.

Das deutsche Gebrauchsmuster G 90 04 592.0 U1 beschreibt eine Vorrichtung zum Düngen von Pflanzen mittels einer bestimmten Verpackung, die aus einem Band aus biologisch abbaubaren Substanzen besteht. Dieses Band ist in Kammern unterteilt, die durch Perforationen getrennt sind und Dünger enthalten.

Düngestäbchen enthalten üblicherweise komplexe Gemische von anorganischen und gegebenenfalls organischen Komponenten, die die für das Pflanzenwachstum nötigen Elemente - je nach Wahl zeitverzögert oder unmittelbar wirksam - liefern können. In Betracht kommen insbesondere die Elemente N, P, K, Ca, Mg, Fe, Mn, Zn, Cu, Mo, B, Co, S und Na. Langsam wirkende Stickstoff-Depotdüngerkomponenten sind beispielsweise ausgewählte organische Stickstoffverbindungen, wie Harnstoff-Formaldehyd-Kondensat oder Crotonylidendiharnstoff; schnellwirkend demgegenüber Ammonium-, Nitrat- und Amidstickstoffverbindungen. Für die Phosphatversorgung der Pflanzen haben sich wasserlösliche, ammoniumnitratlösliche und mineralsäurelösliche Ammonium-, Kalium-, Magnesium- und Calciumphosphate bewährt. Kalium wird beispielsweise in Form von K₂SO₄ oder KCl verwendet, aber auch Kalium-Magnesiumsulfat ist geeignet. Magnesium kann in Form verschiedener Sulfatsalze zur Verwendung kommen. Geeignete weitere Mischungskomponenten sind beispielsweise Ammoniummolybdat, Zinksulfat sowie Borsäure. Geeignete organische Komponenten, die als Nährstoffe und/oder als Füllstoffe Verwendung finden können, sind Torf, Biomassen aus Bakterien oder Pilzen, Harnstoff, Hornspäne, Hornmehl, Blut- und Knochenmehl, Seetangpulver und dergleichen. Wichtige weitere Bestandteile solcher Düngemittel können aber auch Pflanzenschutzmittel zur Minderung des unerwünschten Befalls der Pflanzen von Schädlingen und/oder Krankheitserregern sein. Weitere übliche Zuschlagsstoffe in Mitteln der hier betroffenen Art sind beispielsweise Farb- und Geruchsstoffe, Gleitmittel, Urease- und Nitrifikationshemmer sowie ganz einfach Füllstoffe, beispielsweise Sand.

Die komplexen Wirkstoffgemische aus Pflanzennähr- und Pflanzenschutzstoffen werden mit einem üblicherweise wasserlöslichen thermoplastischen Bindemittel innig vermischt und in dieser Form bei erhöhten Temperaturen formgebend zu stabförmigen Gebilden, beispielsweise Stiften, Nägeln oder Keilen verarbeitet. Dem Bindemittel kommt nicht nur die Aufgabe der stabilen Formgebung für das komplexe Wertstoffgemisch zu, es kann auch die Freigabecharakteristik der Formkörper im praktischen Einsatz beeinflussen. Üblicherweise werden als Bindemittel - vergleiche dazu die eingangs zitierte Literatur und die darin benannte Sekundärliteratur - synthetische oder halbsythetische Polymerverbindungen eingesetzt, wobei in der Praxis dem Polyethylenglykol, dem Polyvinylpyrrolidon, der Carboxymethylcellulose, dem Polyvinylalkohol und vor allem der thermomechanisch plastifizierten Stärke besondere Bedeutung zukommt. Die Herstellung der Düngestäbchen kann dadurch erfolgen, daß ein homogenisiertes Gemisch aus Nährstoffen, Bindemittel und sonstigen Füll- und Inhaltsstoffen erzeugt und dieses Gemisch unter plastifizierenden Bedingungen, beispielsweise mit Hilfe eines Extruders, zu einem endlosen Strang gepreßt wird, der dann durch Schneiden quer zu seiner Austrittsrichtung in Stäbchen der gewünschten Länge geschnitten wird. Dieses und andere Herstellverfahren führen stets zu einzelnen Stäben mit einheitlichen Abmessungen. Für die Handhabung im Handel wurden diese Stäbe bisher einzeln, beispielsweise in Blisterpackungen, oder aber zu mehreren in einem Behältnis verpackt. Der Verbraucher benutzte dann je nach Dosierungsempfehlung und Größe des Blumentopfs oder Blumenkastens einen oder gleichzeitig mehrere Stäbchen pro Pflanze. Während die Einzelverpackungen der Stäbchen auch in Blisterpackungen eine sehr aufwendige Maßnahme ist, besteht bei der Packung von mehreren Stäbchen in einem Behälter immer die Gefahr, daß durch Reiben und Schlagen der Stäbchen aneinander Abrieb entsteht oder aber die Stäbchen zerbrechen. Demgegenüber bestand die Aufgabe der vorliegenden Erfindung darin, eine Angebotsform zu finden, die die Nachteile bei Transport und Lagerung vermeidet und gleichzeitig eine für jede Anwendung optimale Portionierung gestattet.

Gegenstand der Erfindung ist ein einheitliche Formkörper aus thermoplastichem, Düngemittel enthaltenden, Material in Gestalt eines strukturierten Bandes, das aus nebeneinanderliegenden stabförmigen Einheiten besteht, die über dünnere, als Sollbruchstellen ausgestaltete Zwischenglieder miteinander verbunden sind. Vorzugsweise ist dieses aus miteinander verbundenen Düngestäbchen bestehende Band ein- oder mehrfach quer zu seiner Längsrichtung gefaltet, oder es ist in Form einer Spirale in seiner Längsrichtung aufgerollt, und wird in dieser Form verpackt.

Die neuartige Formgebung der Düngemittelstäbchen ermöglicht es, mehrere Stäbchen gemeinsam zu verpacken, ohne daß es in merklichem Maße zu Abrieb oder Aneinanderschlagen der Stäbchen kommen kann. Gleichzeitig ermöglicht es diese Angebotsform dem Anwender, sowohl einzelne Stäbchen vom Band abzubrechen und wie gewohnt einzelne Blumentöpfe zu düngen, oder aber größere Bandstücke, d. h. mehrere Stäbchen auf einmal vom Band abzutrennen und auf diese Weise größere Pflanzschalen, Balkonkästen o. ä. mit der entsprechend größeren Menge an Dünger zu versorgen. Die erfindungsgemäßen. Formkörper lassen sich außerdem sehr einfach dadurch herstellen, daß die Einzelkomponenten des Materials, das die Formkörper bilden soll, zunächst gemischt werden, dann mit Hilfe eines Kneters oder Extruders bei erhöhter Temperatur unter Druck homogenisiert und nötigenfalls plastifiziert werden, und anschließend durch eine Schlitzdüse zu einem Endlosband gepreßt werden, das dann durch eine Präge- und/oder Stanzvorrichtung, beispielsweise geeignete Walzen oder Walzenpressen, in die gewünschte Form gebracht und schließlich auf die gewünschte Länge geschnitten und gegebenenfalls gefaltet oder gerollt wird. Auf die nachträgliche Ausformung kann ganz oder teilweise auch verzichtet werden, wenn die Formgebung durch Verwendung einer entsprechend gestalteten Schlitzdüse erreicht wird. Diese Herstellverfahren sind deshalb ein eigener Gegenstand der vorliegenden Erfindung.

Bei dem Material, aus dem die erfindungsgemäßen Formkörper herstellt werden, kann es sich um all jene thermoplastischen Materialien handeln, die bisher schon zur Herstellung von einzelnen Düngestäbchen mit Hilfe von Extrusionsverfahren oder ähnlichen Methoden eingesetzt wurden. Wie eingangs geschildert, handelt es sich dabei um Gemische aus anorganischen und/oder organischen Pflanzennährstoffen, sowie gegebenenfalls weiteren Wirk- und Füllstoffen und geeigneten Bindemitteln, die als solche thermoplastisch sind oder aber zusammen mit den Nähr- und Füllstoffen oder aber zusammen mit zusätzlichen Plastifizierungshilfsmitteln thermoplastische Eigenschaften aufweisen, so daß die Verarbeitung des Gesamtgemischs auf thermomechanischem Wege möglich wird. Als besonders gut geeignetes Bindemittel hat sich die in der älteren deutschen Patentanmeldung P 42 09 014.8 verwendete plastifizierte Stärke herausgestellt, da sie es in besonders vorteilhafter Weise erlaubt, die mechanischen Eigenschaften des Materials auch bei wechselnden Inhaltsstoffen an die jeweiligen Bedürfnisse anzupassen, und außerdem biologisch leicht abbaubar ist. Der Inhalt dieser Patentanmeldung wird daher ausdrücklich mit zum Offenbarungsgehalt der vorliegenden Anmeldung gezählt. Die Stärke gewinnt ihre thermoplastischen Eigenschaften üblicherweise während der Bearbeitung bei erhöhten Drucken und Temperaturen, gegebenenfalls unmittelbar vor Herstellung der Formkörper im Extruder. Übliche Verarbeitungstemperaturen liegen hier meist oberhalb von 90 °C, vorzugsweise zwischen 95 und 120 °C; übliche Drucke meist oberhalb von 2 bar, vorzugsweise zwischen 4 und 30 bar. Vorzugsweise wird die Plastifizierung der Stärke unter Zusatz von Wasser, insbesondere aber von niedermolekularen organischen Plastifizierungsmitteln, in erster Linie polyfunktionellen Alkoholen, wie Glycerin, erreicht. Im Material der Formkörper beträgt der Gehalt an thermomechanisch aufgeschlossener Stärke vorzugsweise 10 bis 40 Gew.-%, insbesondere 15 bis 30 Gew.-%, bezogen auf das Gesamtgewicht aller Bestandteile. Die Wirk- und Füllstoffe machen üblicherweise mehr als 50 Gew.-%, vorzugsweise mehr als 60 Gew.-% und insbesondere zwischen 70 und 80 Gew.-% aus.

Die erfindungsgemäßen Formkörper können ohne weiteres in verschiedensten Abmessungen hergestellt werden. Die Breite des Bandes, die im einfachsten Falle gleichzeitig die Länge der stabförmigen Einheiten darstellt, liegt meist zwischen 20 und 200 mm, doch ist es ohne weiteres möglich, auch Abmessungen über oder unter diesen Werten einzustellen. Vorzugsweise liegt die Breite des Bandes zwischen 30 und 100 mm. Die stabförmigen Einheiten, die nebeneinanderliegend die Hauptmasse des Bandes ausmachen, weisen üblicherweise mittlere Durchmesser zwischen 2 und 20 mm, vorzugsweise zwischen 4 und 15 mm auf, doch können selbstverständlich auch diese Abmessungen anders gewählt werden, wenn dies im Hinblick auf die Länge der einzelnen Stäbchen und dem gewünschten Anwendungszweck notwendig erscheint. Als mittlerer Durchmesser ist bei Stäben, die keinen kreisförmigen oder über die Länge konstanten Querschnitt aufweisen, der Durchmesser eines zylinderförmigen Stabes anzusehen, der die gleiche Masse wie der tatsächliche Stab hat. Üblicherweise liegt das Verhältnis von Länge der stabförmigen Einheiten zu ihrem mittleren Durchmesser zwischen 2 : 1 und 20 : 1, vorzugsweise zwischen 4 : 1 und 10 : 1. Der Querschnitt der stabförmigen Einheiten kann über ihre Länge unterschiedliche Gestalt aufweisen, so daß beispielsweise auch keilförmige oder nagelförmige Ausführungen gewählt werden können.

Im erfindungsgemäßen Formkörper sind die stabförmigen Einheiten durch Zwischenglieder aneinander gebunden, die aus demselben thermoplastischen Material wie die stabförmigen Einheiten bestehen. Die Zwischenglieder können die stabförmigen Einheiten über ihre volle Länge verbinden oder aber unterbrochen sein und nur einzelne Stellen der einzelnen Stäbchen miteinander verbinden. Die Form der Zwischenglieder wird im wesentlichen durch den Zweck bestimmt, daß die einzelnen Stäbe nach der Ausformung des Formkörpers und dem Erkalten leicht voneinander durch Abbrechen oder Abknicken abtrennbar sein sollen. Üblicherweise wird daher die Länge der Zwischenglieder, d. h. der Abstand zwischen den einzelnen stäbförmigen Einheiten, 10 bis 100 % des mittleren Durchmessers der stabförmigen Einheiten betragen, wenn auch selbstverständlich andere Werte ohne weiteres gewählt werden können.

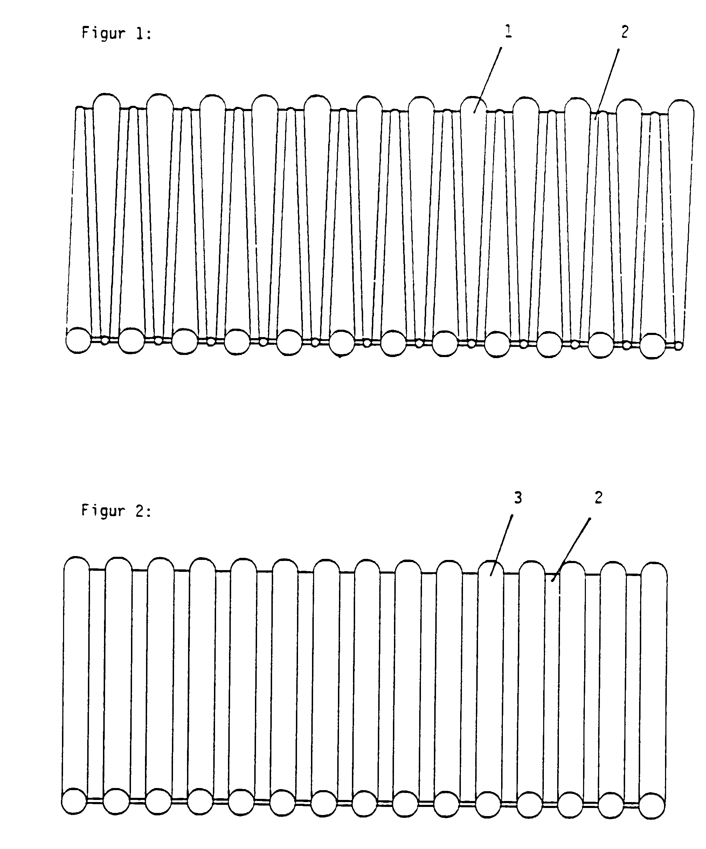

In einer bevorzugten Ausführungsform sind im erfindungsgemäßen Formkörper die einzelnen stabförmigen Einheiten mit ihrer Längsachse rechtwinklig zur Laufrichtung des Bandes ausgerichtet. Erstreckt sich dabei eine Einheit jeweils über die volle Breite des Bandes, wie in den Figuren 1 und 2, so stimmen die Breite des Bandes und die Länge der stabförmigen Einheiten überein. Selbstverständlich können aber auch andere Anordnungen der stabförmigen Einheiten im Band gewählt werden, wenn dies aus besonderen Gründen zweckmäßig sein sollte.

Die Zahl der in einem Formkörper aneinanderhängenden stabförmigen Einheiten kann prinzipiell beliebig gewählt werden, doch hat es sich für die Praxis als zweckmäßig herausgestellt, 5 bis 500, vorzugsweise 10 bis 100 nebeneinanderliegende stabförmige Einheiten in einem Formkörper zu vereinigen. Zur leichteren Handhabung und Verpackung kann der bandförmige Körper vor dem Erkalten ein- oder mehrfach quer zu seiner Längsrichtung gefaltet oder auch in Form einer Spirale in seiner Längsrichtung aufgerollt werden.

Zur Herstellung von aneinanderhängenden Düngerstäbchen, die einen über ihre Länge konstanten Querschnitt aufweisen, wird vorzugsweise eine Schlitzdüse verwendet, die durch ihre Form die Extrusion von mehreren nebeneinander liegenden, miteinander durch dünne Materialstreifen verbundenen Strängen des gewünschten Querschnitts erlaubt. Durch Schneiden dieses Bandes quer zu seiner Austrittsrichtung kann ohne nachträgliche Formgebung ein Formkörper, wie er beispielsweise in Figur 2 dargestellt ist, erhalten werden. Die Längsachse der stabförmigen Einheiten liegt bei diesem Verfahren in Richtung des aus dem Extruder austretenden Bandes. Je nachdem, ob rechtwinkelig oder schräg zur Austrittsrichtung geschnitten wird, liegen die Stäbchen im resultierenden Formkörper so wie in Figur 2 dargestellt oder entsprechend schräg. Die Länge der einzelnen Stäbchen wird bei diesem Verfahren durch Extrusionsgeschwindigkeit und Schneidintervalle bestimmt. Auch hier kann eine Faltung des Formkörpers nachträglich vorgenommen werden, doch ist es auch mögich, eine gefaltete Form des Körpers durch eine entsprechende Form der Schlitzdüse zu erreichen und so auf den Arbeitsgang des Faltens zu verzichten.

Figur 1 zeigt das Beispiel eines erfindungsgemäßen Formkörpers der aus 24 aneinandergereihten Rundkeilen (1) besteht, die über ihre ganze Länge durch plattenförmige Zwischenstücke (2) verbunden sind.

Figur 2 zeigt das Beispiel eines erfindungsgemäßen Formkörpers, der aus 15 aneinandergereihten zylinderförmigen Stäben (3) besteht, die ebenfalls über ihre ganze Länge durch plattenförmige Zwischenstücke (2) verbunden sind.

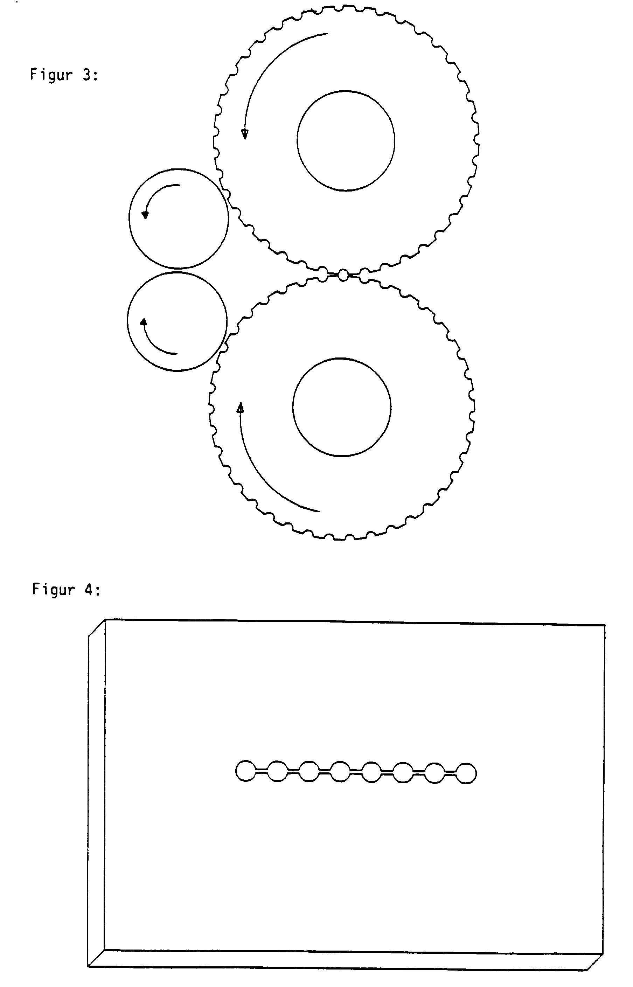

Figur 3 zeigt beispielhaft den Querschnitt durch eine Abzugsvorrichtung für die aus dem Extruder austretenden ungeformten Bänder mit nachgeschalteter Walzenpresse.

Figur 4 zeigt das Beispiel einer Düsenplatte eines Extruders, wie sie zur Extrusion von vorgeformten Bändern verwendet wird, aus denen dann die erfindungsgemäßen Formkörper ohne weitere Formgebung allein durch Schneiden erhalten werden.

### Beispiel

In einem Rührbehälter wurden 6488 g einer Düngersalzmischung, die Stickstoff, Phosphor, Kalium, Magnesium sowie die Spurenelemente Bor, Eisen, Kupfer, Mangan und Molybdän enthielt, mit 61,6 g Farbstoff, 2600 g Kartoffelstärke, 700 g Glycerin und 150 g Wasser vermischt. Die Düngesalze waren so ausgewählt, daß das fertige Produkt einen NPKMg-Wert von 10/5/7/2,3 erhielt. Nach vollständiger Homogenisierung wurde die etwas klebrige Mischung 2 Stunden im geschlossenen Behälter stehen gelassen, wobei ein trocknes, gut rieselfähiges Pulver entstand, das dann der Weiterverarbeitung auf einem Doppelschnecken-Extruder (Firma Werner & Pfleiderer (Continua 37)) mit einer Länge von 13,8 D zugeführt wurde. Das Anfahren des Extruders, der mit einer Schlitzdüse ausgerüstet war, erfolgte mit Glycerin bei geschlossener Düse. Nach Einschalten der Feststoffdosierung wurde die Glycerinzufuhr abgestellt. Es wurde mit einem geringen Durchsatz begonnen und nach dem Austritt des ersten Extrudates die Dosierung langsam auf die gewünschte Leistung von 12 kg/h erhöht. Die Schneckendrehzahl wurde auf 80/Minute eingestellt und die Manteltemperatur mit 81 °C so gewählt, daß die Produkttemperaur an der Frontplatte ca. 95 °C betrug. Der Materialdruck stellte sich bei 6 bar ein. Die Düngemittelbänder wurden in einer Breite von 4,6 cm mit einer Dicke von 3 mm extrudiert und durchliefen sofort anschlieBend eine Walzenpresse, in der zwei gegenläufig arbeitende geprägte Walzen die Ausformung des Bandes übernahmen. Das aus der Walzenpresse austretende Band hatte eine Breite von 46 mm und bestand aus nebeneinanderliegenden zylindrischen Stäben von 5,4 bis 5,8 mm Durchmessern, deren Achse senkrecht zur Laufrichtung des Bandes lag und die durch plattenförmige Stücke einer Dicke von ca. 1 mm und einer Breite von 3,7 mm, die über die volle Länge der Stäbe reichten, verbunden waren. Durch Schneiden wurde das Endlosband anschließend quer zu seiner Laufrichtung in Stücke geschnitten, die jeweils 20 Stäbchen enthielten.

## Patentansprüche

1. Einheitlicher Formkörper aus thermoplastischem, Düngemittel enthaltenden, Material in Gestalt eines strukturierten Bandes, das aus nebeneinander liegenden stabförmigen Einheiten besteht, die über dünnere, als Sollbruchstellen ausgestaltete Zwischenglieder miteinander verbunden sind.

2. Formkörper nach Anspruch 1, dessen Material zu wesentlichen Teilen aus bei erhöhten Drucken und Temperaturen plastifizierter Stärke besteht.

3. Formkörper nach Anspruch 2, dadurch gekennzeichnet, daß die Stärke unter Zusatz von Wasser oder, vorzugsweise, von niedermolekularen organischen Plastifizierungsmitteln, insbesondere polyfunktionellen Alkoholen, plastifiziert wurde.

4. Formkörper nach einem der Ansprüche 2 oder 3, dessen Material einen Gehalt an thermomechanisch aufgeschlossener Stärke von 10 bis 40 Gew.-%, vorzugsweise 15 bis 30 Gew.-%, bezogen auf Gesamtgewicht aller Bestandteile aufweist.

5. Formkörper nach einem der Ansprüche 1 bis 4, bei dem die Länge der stabförmigen Einheiten, die üblicherweise die Breite des Bandes ausmacht, zwischen 20 und 200 mm, vorzugsweise zwischen 30 und 100 mm liegt.

6. Formkörper nach einem der Ansprüche 1 bis 5, bei dem der mittlere Durchmesser der stabförmigen Einheiten zwischen 2 und 20 mm, vorzugsweise zwischen 4 und 15 mm liegt.

7. Formkörper nach einem der Ansprüche 1 bis 6, bei dem das Verhältnis von Länge der stabförmigen Einheiten zu deren mittlerem Durchmesser 2 : 1 bis 20 : 1, vorzugsweise 4 : 1 bis 10 : 1 beträgt.

8. Formkörper nach einem der Ansprüche 1 bis 7, bei dem der durch die als Sollbruchstellen ausgestalteten Zwischenglieder bedingte Abstand zwischen den einzelnen stabförmigen Einheiten 10 % bis 100 % des mittleren Durchmessers dieser Einheiten beträgt.

9. Formkörper nach einem der Ansprüche 1 bis 8 in Gestalt eines Bandes, das aus 5 bis 500, vorzugsweise 10 bis 100 nebeneinander liegenden stabförmigen Einheiten besteht.

10. Formkörper nach einem der Ansprüche 1 bis 9 in Gestalt eines Bandes, das ein oder mehrfach quer zu seiner Längsrichtung gefaltet oder in Form einer Spirale in seiner Längsrichtung aufgerollt ist.

11. Verfahren zur Herstellung eines Formkörpers nach einem der Ansprüche 1 bis 10, bei dem die Einzelkomponenten des Materials, das die Formkörper bilden soll, zunächst gemischt werden, dann mit Hilfe eines Kneters oder Extruders bei erhöhter Temperatur unter Druck homogenisiert und nötigenfalls plastifiziert werden und anschließend durch eine Schlitzdüse zu einem Endlosband gepreßt werden, das dann durch eine Präge- und/oder Stanzvorrichtung in die gewünschte Form gebracht und schließlich auf die gewünschte Länge geschnitten und gegebenenfalls gefaltet oder gerollt wird.

12. Verfahren zur Herstellung eines Formkörpers nach einem der Ansprüche 1 bis 10, bei dem die Einzelkomponenten des Materials, das die Formkörper bilden soll, zunächst gemischt werden, dann mit Hilfe eines Kneters oder Extruders bei erhöhter Temperatur unter Druck homogenisiert und nötigenfalls plastifiziert werden und anschließend durch eine Schlitzdüse zu einem Endlosband gepreßt und auf die gewünschte Länge geschnitten werden, wobei die Schlitzdüse so geformt ist, daß das austretende Band die Form von nebeneinander liegenden Strängen hat, die miteinander durch dünnere Materialstreifen verbunden sind.

13. Verfahren nach einem der Ansprüche 11 oder 12, bei dem als wesentliche Einzelkomponente des Materials Stärke verwendet wird, die während des Homogenisiervorganges bei Temperaturen oberhalb 90 °C, vorzugsweise zwischen 95 und 120 °C und Drucken oberhalb von 2 bar, vorzugsweise zwischen 4 und 30 bar plastifiziert wird.

## Claims

1. A unit moulding of thermoplastic fertilizer-containing material in the form of a structured strip consisting of adjacent rod-like units joined together by relatively thin links designed as weakened points.

2. A moulding as claimed in claim 1 of which the constituent material consists largely of starch plasticized at elevated temperature and pressure.

3. A moulding as claimed in claim 2, characterized in that the starch was plasticized in the presence of water or, preferably, low molecular weight organic plasticizers, more particularly polyhydric alcohols.

4. A moulding as claimed in claim 2 or 3 of which the constituent material has a content of thermomechanically digested starch of 10 to 40% by weight and preferably 15 to 30% by weight, based on the total weight of all the constituents.

5. A moulding as claimed in any of claims 1 to 4, in which the length of the rod-like units, which normally makes up the width of the strip, is between 20 and 200 mm and preferably between 30 and 100 mm.

6. A moulding as claimed in any of claims 1 to 5, in which the average diameter of the rod-like units is between 2 and 20 mm and preferably between 4 and 15 mm.

7. A moulding as claimed in any of claims 1 to 6, in which the length-to-mean diameter ratio of the rod-like units is from 2:1 to 20:1 and preferably from 4:1 to 10:1.

8. A moulding as claimed in any of claims 1 to 7, in which the interval between the individual rod-like units - determined by the links designed as weakened points - is 10 to 100% of the mean diameter of said units.

9. A moulding as claimed in any of claims 1 to 8 in the form of a strip consisting of 5 to 500 and preferably 10 to 100 adjacent rod-like units.

10. A moulding as claimed in any of claims 1 to 9 in the form of a strip which is folded one or more times transversely of its longitudinal axis or which is rolled up longitudinally in the form of a spiral.

11. A process for the production of the moulding claimed in any of claims 1 to 10 in which the individual components of the material intended to form the moulding are first mixed, the resulting mixture is homogenized and if necessary plasticized under pressure at elevated temperature in a kneader or extruder and is subsequently extruded through a slot die to form a continuous strip which is then brought into the required shape by an embossing and/or punching tool and, finally, cut to the required length and optionally folded or rolled up.

12. A process for the production of the moulding claimed in any of claims 1 to 10 in which the individual components of the material intended to form the moulding are first mixed, the resulting mixture is homogenized and if necessary plasticized under pressure at elevated temperature in a kneader or extruder and is subsequently extruded through a slot die to form a continuous strip and cut to the required length, the slot die being shaped in such a way that the strip issuing therefrom assumes the form of adjacent strands which are joined together by relatively thin strips of material.

13. A process as claimed in claim 11 or 12 in which the key individual component of the material is starch which, during the homogenizing process, is plasticized at temperatures above 90°C and preferably between 95 and 120°C and under pressures above 2 bar and preferably between 4 and 30 bar.

## Revendications

1. Corps façonné unitaire en matériau contenant de l'engrais thermoplastique sous la forme d'une bande structurée
qui se compose d'unités en forme de bâtonnets situées les unes à côté des autres qui sont reliées par des éléments intermédiaires plus minces, structurés en points destinés à la rupture.

2. Corps façonné selon la revendication 1,
dont le matériau se compose en partie importante d'amidon plastifie à pression et températures élevées.

3. Corps façonné selon la revendication 2,
caractérisé en ce que
l'amidon a été plastifié en ajoutant de l'eau ou de préférence des agents plastifiants organiques à bas poids moléculaire, en particulier des alcools polyfonctionnels.

4. Corps façonné selon une des revendications 2 ou 3,
dont le matériau comprend une teneur d'amidon désagrégé thermomécaniquement de 10 à 40 % en poids, de préférence de 15 à 30 % en poids, par rapport au poids total de tous les composants.

5. Corps façonné selon une des revendications 1 à 4, dans lequel
la longueur des unités en forme de bâtonnets qui habituellement représentent la largeur de la bande se situe entre 20 et 200 mm, de préférence entre 30 et 100 mm.

6. Corps façonné selon une des revendications 1 à 5, dans lequel
le diamètre moyen des unités en forme de bâtonnets se situe entre 2 et 20 mm, de préférence entre 4 et 15 mm.

7. Corps façonné selon une des revendications 1 à 6, dans lequel
le rapport de la longueur des unités en forme de bâtonnets à leur diamètre moyen se monte de 2:1 à 20:1, de préférence de 4:1 à 10:1.

8. Corps façonné selon une des revendications 1 à 7, dans lequel
l'écartement entre les unités individuelles en forme de bâtonnets, dû aux éléments intermédiaires structurés en points destinés à la rupture rejoint 10 % à 100 % du diamètre moyen de ces unités.

9. Corps façonné selon une des revendications 1 à 8, sous la forme d'une bande qui se compose de 5 à 500, de préférence de 10 à 100 unités en forme de bâtonnets situées les unes à côté des autres.

10. Corps façonné selon une des revendications 1 à 6, sous la forme d'une bande qui est pliée une ou plusieurs fois transversalement à son sens longitudinal ou est enroulée sous la forme d'une spirale dans son sens longitudinal.

11. Procédé de fabrication d'un corps façonné selon une des revendications 1 à 10
dans lequel
les composants individuels du matériau qui doit constituer les ccrps façonnés, sont d'abord mélangés, ensuite sont homogénéisés à l'aide d'un malaxeur ou d'une extrudeuse à température élevée et sous pression et, si besoin est, sont plastifiés et ensuite pressés à travers une buse à fente en une bande sans fin qui est amenée à la forme désirée par un dispositif d'estampage et/ou de matriçage et enfin est découpée à la longueur désirée et éventuellement pliée ou enroulée.

12. Procédé de fabrication d'un corps de forme selon une des revendications 1 à 11,
dans lequel
les composants individuels du matériau qui doit former le corps façonné, sont d'abord mélangés, ensuite sont homogénéisés à l'aide d'un malaxeur ou d'une extrudeuse à température élevée et sous pression et si nécessaire sont plastifiés et ensuite pressés à travers une buse à fente en une bande sans fin et sont découpée à la longueur désirée, la buse à fente étant formée de façon que, la bande sortante ait la forme de cordons situés côte à côte qui sont reliés entre eux par des bandes plus minces de matériau.

13. Procédé selon une des revendications 11 ou 12,
dans lequel
on utilise comme composant unique du matériau de l'amidon qui est plastifié pendant le processus d'homogénéisation à des températures au-dessus de 90°C, de préférence comprises entre 95 et 120°C et à des pressions au-dessus de 2 bars, de préférence comprises entre 4 et 30 bars.
